# EUROPÄISCHE PATENTSCHRIFT

(11) **EP 2 557 020 B1**
(45) Veröffentlichungstag und Bekanntmachung des Hinweises auf die Patenterteilung: **01.10.2014**
(21) Anmeldenummer: 12176653.9
(22) Anmeldetag: 17.07.2012
(51) Int. Cl.: B62D 15/02, G06K 9/00, G01S 15/52, G01S 15/93

(54) **Verfahren zur Unterstützung eines Fahrers beim Einparken**
Method to support a driver when parking
Procédé destiné à assister un conducteur lors du parcage

(30) Priorität: 12.08.2011 DE 102011080933
(43) Veröffentlichungstag der Anmeldung: 13.02.2013
(73) Patentinhaber: ROBERT BOSCH GMBH, 70442 Stuttgart (DE)
(72) Erfinder: Niemz, Volker, 71277 Rutesheim (DE)

(56) Entgegenhaltungen:
- EP-A1- 1 927 962
- EP-A2- 1 947 476
- DE-A1-102009 027 650
- JP-A- 2010 018 180

## Beschreibung

### Stand der Technik

Die Erfindung betrifft ein Verfahren zur Unterstützung eines Fahrers eines Fahrzeuges bei einem Einparkvorgang, sowie ein Fahrassistenzsystem zur Durchführung des Verfahrens.

Fahrassistenzsysteme stellen dem Fahrer eines Fahrzeuges ein oder mehrere Zusatzeinrichtungen zur Verfügung, die in verschiedenen Verkehrssituationen eine erhöhte Sicherheit und/oder mehr Komfort bieten. Typische Beispiele für Komforteinrichtungen sind Fahrerinformationssysteme zur Darstellung von Fahrinformationen oder Navigationssysteme zur Bereitstellung von Positionsdaten. Neben Komforteinrichtungen kann ein Fahrassistenzsystem auch prädikative Zusatzeinrichtungen umfassen, die mit Hilfe von Umfeldsensorik das Umfeld des Fahrzeuges abtasten und Objekte im Fahrzeugumfeld erfassen. Zu den prädikativen Sicherheitseinrichtungen zählen zum Beispiel Parkassistenten, Spurwechselassistenzsysteme oder Abstandsregelautomaten (ACC, Adaptive Cruise Control).

Parkassistenten unterstützen den Fahrer insbesondere beim Einparken seines Fahrzeuges. Dazu vermisst der Parkassistent eine Parklücke bei der Vorbeifahrt und führt anschließend den Fahrer in die vermessene Parklücke hinein. Hierbei kann das Führen in passiver Form geschehen, wobei dem Fahrer über eine Benutzerschnittstelle (Mensch-Maschine-Schnittstelle beziehungsweise Human-Machine-Interface, HMI) Lenkvorgaben sowie Losfahr- und Anhaltebefehle übermittelt werden. Bei einer aktiven Führung übernimmt der Parkassistent eine Quer- und/oder eine Längsführung des Fahrzeugs und führt den Einparkvorgang selbsttätig aus.

Aus DE 10 2009 024 083 A1 ist ein Verfahren bekannt, das eine Parklücke erfasst und die Einparktrajektorie in die Parklücke berechnet. Bei dem Verfahren werden Umfeldbedingungen des Fahrzeuges bei einer Vorbeifahrt an einer potenziellen Parklücke vor dem Durchführen eines eigentlichen Parkvorgangs erfasst und gegebenenfalls eine geeignete Parklücke erkannt. Ist eine Parklücke als geeignet erkannt, wird eine Fahrtrajektorie abhängig von den Umfeldbedingungen, die zumindest ein parklückenexternes und die Parklücke nicht direkt begrenzendes Hindernis umfassen, und Kenngrößen der Parklücke selbst bestimmt.

Übliche Parkassistenten erkennen eine geeignete Parklücke beim Vorbeifahren des Fahrzeuges. Allerdings treten in der Praxis häufig Situationen auf, in denen das Vorbeifahren an der Parklücke aufgrund von Hindernissen nicht möglich ist. Insbesondere in Parkhäusern kann eine die Parklücke begrenzende Wand das Fahrzeug an der Vorbeifahrt hindern.

Das Dokument EP 1 927 962 A1 ist als nächstliegender Stand der Technik nach dem Oberbegriff des Anspruchs 1 zu sehen.

Aus DE 10 2008 052 439 A1 ist ein Verfahren zur Erkennung eines Zielparkplatzes eines Fahrzeuges bekannt, bei dem am Heck des Fahrzeuges ein Abtast-Laser-Radar angebracht ist, um eine Parklücke zu detektieren. Zur Detektion wird aus den Entfernungsdaten des Abtast-Laser-Radars ein effektives Cluster erstellt. Das Erkennen eines Parkplatzes erfolgt, indem Hindernisecken aus dem Cluster extrahiert werden und diese ausgewertet werden. Dabei erkennt eine Parkstellenfestlegungseinheit eine Hauptbezugsecke und eine nachgeordnete Bezugsecke aus den Hindernisecken und legt eine Zielparkstelle für das rechtwinklige Einparken fest.

Beim Erfassen und Vermessen von Parklücken ist typischerweise eine Vorbeifahrt des Fahrzeuges notwendig, was die Systemverfügbarkeit auf Situationen, in denen eine Vorbeifahrt möglich ist, begrenzt. Dagegen sind Verfahren, die das Erfassen von Parklücken auch ohne Vorbeifahrt ermöglichen, auf zusätzliche am Fahrzeug angebrachte Sensoren angewiesen, deren Daten mittels komplexer Algorithmen ausgewertet werden.

### Offenbarung der Erfindung

Erfindungsgemäß wird ein Verfahren zur Unterstützung eines Fahrers eines Fahrzeuges bei einem Einparkvorgang, insbesondere zum Auffinden einer Parklücke, vorgeschlagen, das die folgenden Schritte umfasst:
(a) Bereitstellen von Umfelddaten, die das Umfeld des Fahrzeuges charakterisieren;
(b) Auswerten der Umfelddaten im Bezug auf mindestens ein erstes Objekt in einem seitlichen Umfeld des Fahrzeuges, das eine potenzielle Parklücke andeutet;
(c) Auswerten der Umfelddaten im Bezug auf mindestens ein zweites Objekt außerhalb des seitlichen Umfelds des Fahrzeuges, das das Vorhandensein der Parklücke bestätigt; und
(d) Anzeigen der vorhandenen Parklücke.

Im Rahmen der vorliegenden Erfindung können Umfelddaten Daten umfassen, die das Umfeld des Fahrzeuges direkt oder indirekt charakterisieren. Insbesondere können die Umfelddaten Sensordaten einer Umfeldsensorik umfassen, die das Fahrzeugumfeld direkt charakterisieren, indem Objekte im Fahrzeugumfeld erfasst werden. Typischerweise kann die Umfeldsensorik im Rahmen von Zusatzeinrichtungen in einem Fahrassistenzsystem integriert sein. Solche Zusatzeinrichtungen können beispielsweise einen Parkassistenten, ein Notbremssystem oder einen Abstandsregelautomaten umfassen, die über Sensoren wie Ultraschallsensoren, Lasersensoren, Radarsensoren, Infrarotsensoren, Kameras oder andere optische Sensoren Objekte im Umfeld des Fahrzeuges erfassen. Alternativ oder zusätzlich können Umfelddaten, wie zum Beispiel digitale Informationen eines Navigationsgerätes, das Fahrzeugumfeld indirekt charakterisieren, wobei das Navigationsgerät ebenfalls im Fahrassistenzsystem integriert sein kann.

Weiterhin beschreibt das seitliche Umfeld eines Fahrzeuges das Umfeld, in dem ein seitlich an dem Fahrzeug angebrachter Sensor Objekte erfassen kann. Damit ergibt sich das seitliche Umfeld aus dem Erfassungsbereich eines seitlich am Fahrzeug angebrachten Sensors. Falls mehrere Sensoren seitlich am Fahrzeug angebracht sind, ergibt sich das seitliche Umfeld aus der Superposition der einzelnen, möglicherweise überlappenden Erfassungsbereiche der seitlich am Fahrzeug angebrachten Sensoren. Analog dazu stellt das Fahrzeugumfeld außerhalb des seitlichen Umfelds des Fahrzeuges das zu dem seitlichen Umfeld disjunkte Umfeld dar. Dieses Umfeld ergibt sich somit aus der Superposition der einzelnen, möglicherweise überlappenden Erfassungsbereiche der vorne und hinten am Fahrzeug angebrachten Sensoren.

In einer Ausführungsform des erfindungsgemäßen Verfahrens werden die Umfelddaten von mindestens einer Umfeldsensorik und/oder mindestens einer Ortungseinrichtung bereitgestellt. Die Umfeldsensorik kann insbesondere ein oder mehrere Umfeldsensoren, zum Beispiel optische Sensoren, Ultraschallsensoren, Lasersensoren, Lidarsensoren, Infrarotsensoren und/oder Radarsensoren, umfassen.

In einer Ausführungsform des erfindungsgemäßen Verfahrens erfolgt das Bereitstellen und Auswerten von Umfelddaten in Reaktion auf beispielsweise die Aktivierung eines Parkassistenzsystems durch den Fahrer. Alternativ oder zusätzlich kann die Information, dass eine Parklücke gesucht wird, von dem Fahrer über eine Benutzerschnittstelle, beispielsweise eine Mensch-Maschine-Schnittstelle, bereitgestellt werden.

In einer weiteren Ausführungsform des erfindungsgemäß vorgeschlagenen Verfahrens umfassen die Umfelddaten Sensordaten mindestens eines Umfeldsensors, der Objekte in dem seitlichen Umfeld des Fahrzeuges und/oder in dem Umfeld vor dem Fahrzeug detektiert. Der mindestens eine Umfeldsensor zum Erfassen von Objekten im seitlichen Umfeld des Fahrzeuges detektiert vorzugsweise das seitliche Umfeld des Fahrzeuges, das sich in Fahrtrichtung gesehen im vorderen Bereich des Fahrzeuges befindet. Demzufolge können die seitlichen am Fahrzeug angeordneten Umfeldsensoren, insbesondere Abstandssensoren wie Ultraschall-, Lidar- und/oder Radarsensoren, Sensordaten liefern, die mindestens ein erstes Objekt, wie ein parkendes Fahrzeug oder eine Säule, in dem seitlichen Umfeld des Fahrzeuges detektieren. Die Umfeldsensoren, die in Fahrtrichtung gesehen an der Front des Fahrzeuges angeordnet sind, können dagegen das zweite Objekt, wie eine Wand in einem Parkhaus oder ein ausparkendes Fahrzeug, vor dem Fahrzeug erkennen.

Auf diese Weise kann aus den gewonnen Umfelddaten der Umfeldsensoren der Abstand zwischen dem Fahrzeug und einem detektierten Objekt bestimmt werden. Hierbei kann beispielsweise ein Triangulationsverfahren eingesetzt werden, in dem mindestens zwei der Umfeldsensoren, vorzugsweise mehrere Paare von Sensoren, zur Abstandsmessung mittels trigonometrischer Funktionen verwendet werden. Zusätzlich kann bei der Verwendung von mehreren Paaren von Umfeldsensoren, die vorzugsweise seitlich und/oder an der Front des Fahrzeuges angeordnet sind, auf die Kontur des Objekts geschlossen werden. So ergeben sich beispielsweise für eine Wand aus dem Triangulationsverfahren für mehrere Paare von Umfeldsensoren Abstandsmesswerte, die innerhalb einer Fehlertoleranz für unterschiedliche Punkte entlang der Wand auf einen gleichen Abstand zum Fahrzeug hinweisen.

In einer bevorzugten Ausführungsform werden kontinuierlich Umfelddaten gesammelt. Dabei wird das erste Objekt im seitlichen Bereich des Fahrzeuges als eine potenzielle Parklücke andeutend anerkannt, wenn das detektierte Objekt ein statisches Objekt ist und dieses erste Objekt zumindest teilweise aus dem Erfassungsbereich der seitlich am Fahrzeug angeordneten Umfeldsensorik verschwindet.

Wird das erste Objekt in dem seitlichen Umfeld des Fahrzeuges als eine potenzielle Parklücke andeutend bestätigt, werden die Umfelddaten zusätzlich im Bezug auf mindestens ein zweites Objekt untersucht, das sich außerhalb des seitlichen Umfeldes des Fahrzeuges befindet, vorzugsweise in dem Umfeld vor dem Fahrzeug. Wird ein solches zweites Objekt erkannt, so kann dieses ebenfalls bei der Detektion von Parklücken und insbesondere im Bezug auf das Vorhandensein von Parklücken berücksichtigt werden.

Wird ein zweites Objekt außerhalb des seitlichen Umfeldes nicht erkannt, können die Umfelddaten während der Vorbeifahrt auf ein zeitlich auf das erste Objekt folgendes, zweites Objekt in dem seitlichen Umfeld des Fahrzeuges untersucht werden. Anhand dieser Daten kann bei Detektion eines solchen zweiten Objekts die Parklücke vermessen werden. Dazu können Funktionen ausgenutzt werden, die typischerweise zur Detektion von Parklücken im Vorbeifahren in Parkassistenten verwendet werden.

In einer Ausführungsform des erfindungsgemäßen Verfahrens werden die Umfelddaten in Bezug auf das zweite Objekt im Umfeld vor dem Fahrzeug ausgewertet. Auf diese Weise kann festgestellt werden, ob sich ein Objekt vor dem Fahrzeug befindet. Weiterhin können die Umfelddaten in einer zeitlichen Abfolge im Bezug auf das zweite Objekt in dem Umfeld vor dem Fahrzeug ausgewertet werden, um temporäre von statischen Objekten zu unterscheiden. So kann beispielsweise eine Wand von einem ausparkenden Fahrzeug unterschieden werden.

In einer weiteren Ausführungsform des erfindungsgemäßen Verfahrens werden die Umfelddaten in Bezug auf das zweite Objekt anhand von Veränderungen in mindestens einem Lichtkegel in dem Umfeld vor dem Fahrzeug ausgewertet, wobei der Lichtkegel durch mindestens einen Scheinwerfer an dem Fahrzeug erzeugt wird. Dazu kann der Lichtkegel von Umfeldsensoren am Fahrzeug, insbesondere im Umfeld vor dem Fahrzeug, detektiert werden, wobei die Umfeldsensoren vorzugsweise als optische Sensoren ausgestaltet sind. Anhand dieser Daten betreffend den Lichtkegel kann ein durch den Scheinwerfer beleuchtetes Objekt, beispielsweise eine Wand vor dem Fahrzeug, erkannt werden, das das Vorhandensein einer Parklücke unmittelbar neben dem Objekt auch ohne Vorbeifahrt bestätigen kann. Insbesondere kann aus diesen Daten auf die Struktur des von dem Lichtkegel beleuchteten Objekts geschlossen werden und beispielsweise eine Wand mit glatter Struktur von einem vorausfahrenden oder wartenden Fahrzeug unterschieden werden. Diese Unterscheidung kann insbesondere in Stausituationen im Stadtverkehr relevant sein.

In einer weiteren Ausführungsform des erfindungsgemäßen Verfahrens umfassen die Umfelddaten digitale Informationen, die die Position des Fahrzeuges und von Objekten im Umfeld des Fahrzeuges beinhalten. Diese Informationen können beispielsweise von einem Navigationssystem bereitgestellt werden, das ein digital abgespeichertes Straßennetz mit Positionsmarkierungen für zum Beispiel Parkplätze oder Parkhäuser und eine Ortungseinheit basierend auf einem GNSS (Global Navigation Satellite System) wie GPS (Global Positioning System), GLONASS (russisches Satellitensystem), COMPASS (chinesisches Satellitensystem), IRNSS (Indian Regional Navigation Satellite System, indisches regionales Satellitennavigationssystem) oder Galileo umfasst. Ein Vergleich zwischen den im digitalen Straßennetz enthaltenen Informationen und der aktuellen Position des Fahrzeuges kann beispielsweise auf eine Parkhausbegrenzung wie zum Beispiel eine Wand hinweisen. Daraus lässt sich wiederum auf ein zweites Objekts außerhalb des seitlichen Umfelds des Fahrzeuges und auf das Vorliegen einer Parklücke schließen. Auf diese Weise können die Umfelddaten im Bezug auf das zweite Objekt anhand von digitalen Informationen ausgewertet werden, die die Position des Fahrzeuges und von Objekten im Umfeld des Fahrzeuges beinhalten. Anhand dieser Daten kann beispielsweise eine Wand vor dem Fahrzeug erkannt werden, die das Vorhandensein einer Parklücke unmittelbar neben der Wand auch ohne Vorbeifahrt bestätigen kann.

Wird durch das erfindungsgemäß vorgeschlagene Verfahren eine Parklücke erkannt, so wird diese dem Fahrassistenzsystem, insbesondere dem Parkassistenten, und/oder dem Fahrer zum Einparken des Fahrzeuges angeboten. Dazu kann ein Hinweis an den Fahrer ausgegeben werden und/oder ein Signal generiert werden, das ein selbsttätiges Durchführen des Einparkvorganges initüert. Der Hinweis an den Fahrer kann optisch oder akustisch kommuniziert werden. Zur optischen Kommunikation kann beispielsweise ein Display verwendet werden, das einer Mensch-Maschine-Schnittstelle des Fahrassistenzsystems oder einem Entertainmentsystem im Fahrzeug zugeordnet ist. Die akustische Kommunikation erfolgt vorzugsweise über einen Lautsprecher, der ebenfalls einer Mensch-Maschine-Schnittstelle des Fahrassistenzsystems oder einem Entertainmentsystem im Fahrzeug zugeordnet sein kann.

Erfindungsgemäß wird weiterhin ein Computerprogramm vorgeschlagen, mit dem eines der hierin beschriebenen Verfahren durchgeführt wird, wenn das Computerprogramm auf einer programmierbaren Computereinrichtung ausgeführt wird. Bei der Computereinrichtung kann es sich beispielsweise um ein Modul zur Implementierung eines Fahrassistenzsystems oder einer Zusatzeinrichtung hiervon, in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, zum Beispiel über ein Datennetzwerk wie etwa das Internet oder eine Kommunikationsverbindung wie etwa eine Telefonleitung oder eine drahtlose Verbindung.

Erfindungsgemäß wird weiterhin ein Fahrassistenzsystem zur Durchführung des vorstehend beschriebenen Verfahrens vorgeschlagen, das mindestens eine Komponente zum Bereitstellen von Umfelddaten, die das Umfeld des Fahrzeuges charakterisieren, mindestens eine Komponente zum Auswerten der bereitgestellten Daten, mindestens eine Komponente zum Anzeigen einer Parklücke an den Fahrer, wobei die Komponente zum Auswerten der bereitgestellten Daten ausgestaltet ist, mindestens ein erstes Objekt, das eine potenzielle Parklücke andeutet, in einem seitlichen Umfeld des Fahrzeuges zu identifizieren und ein zweites Objekt, das auf das Vorhandensein der Parklücke hinweist, außerhalb des seitlichen Umfeldes des Fahrzeuges zu identifizieren.

Vorzugsweise ist das erfindungsgemäße Fahrassistenzsystem ausgestaltet, das vorstehend beschriebene Verfahren durchzuführen.

In einer Variante umfasst das erfindungsgemäße Fahrassistenzsystem mindestens eine Komponente zur Ausgabe einer Information an einen Fahrer, die diesen auf die Parklücke hinweist. Diese Information kann optisch oder akustisch an den Fahrer kommuniziert werden. Zur optischen Kommunikation kann beispielsweise ein Display verwendet werden, das einer Mensch-Maschine-Schnittstelle des Fahrassistenzsystems oder einem Entertainmentsystem im Fahrzeug zugeordnet ist. Die akustische Kommunikation erfolgt vorzugsweise über einen Lautsprecher, der ebenfalls einer Mensch-Maschine-Schnittstelle des Fahrassistenzsystems oder einem Entertainmentsystem im Fahrzeug zugeordnet sein kann.

In einer weiteren Variante umfasst die Komponente zum Bereitstellen von Umfelddaten Umfeldsensorik und/oder mindestens eine Ortungseinrichtung. In einer weiteren Variante sind ein oder mehrere Umfeldsensoren vorne und/oder seitlich an dem Fahrzeug angeordnet.

### Vorteile der Erfindung

Die Erfindung ermöglicht es, eine Parklücke auch ohne Vorbeifahrt an der Parklücke zu erfassen und zu vermessen. Auf diese Weise kann die Zuverlässigkeit eines Parkassistenten im Bezug auf das Auffinden von Querparklücken und/oder Längsparklücken, erhöht werden. Die Bewertung der Situation, insbesondere wenn eine Vorbeifahrt an der Parklücke nicht möglich ist, ermöglicht dem Fahrassistenzsystem, durch das erfindungsgemäße Verfahren auch solche Parklücken zu erkennen, was den Nutzwert des assistierten Fahrens erhöht. Situationen, in denen Parklücken, insbesondere die äußersten Parklücken eines Parkplatzes oder Parkhauses, vom Fahrer übersehen werden, treten im städtischen Umfeld häufig auf und ein erfindungsgemäß weitergebildetes Fahrassistenzsystem kann somit zu einer relevanten Verbesserung beitragen. Zusätzlich kann die Funktion zum Auffinden von Parklücken gezielt vom Fahrer aktiviert und eingesetzt werden.

Der erhöhten Systemverfügbarkeit steht dabei ein geringer Montageaufwand gegenüber, da potenziell bereits bekannte Komponenten eines Fahrassistenzsystems eingesetzt werden können. Die Erfindung kann daher einfach und kostengünstig nachgerüstet werden.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: ein Fahrzeug in der Draufsicht, ausgerüstet mit einem erfindungsgemäßen Fahrassistenzsystem in einer Fahrsituation, in der eine Parklücke gesucht wird,
- Figur 2: das Fahrzeug gemäß Figur 1 in einer Fahrsituation in einem Parkhaus,
- Figur 3: das Fahrzeug gemäß Figur 1 in einer Fahrsituation, in der ein zuvor parkendes Fahrzeug ausparkt,
- Figur 4: ein Flussdiagramm, dass beispielhaft einen Arbeitsablauf des erfindungsgemäßen Verfahrens darstellt.

### Ausführungsformen der Erfindung

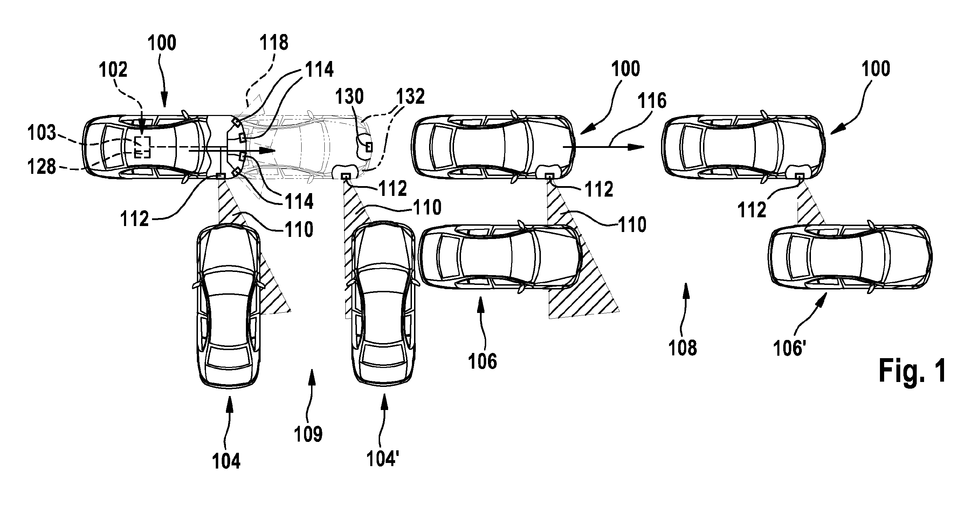

In Figur 1 ist ein Fahrzeug 100, ausgerüstet mit einem erfindungsgemäßen Fahrassistenzsystem 102, dargestellt. Das Fahrzeug 100 befindet sich in einer Fahrsituation, in der der Fahrer auf einem Parkplatz oder in einem Parkhaus auf der Suche nach einer Parklücke 108 ist. Das Fahrzeug 100 bewegt sich dabei in Fahrtrichtung 116 entlang der parkenden Fahrzeuge 104, 104', 106, 106'. Wie in Figur 1 gezeigt, befinden sich die Fahrzeuge 104, 104' in einer Längsparkposition und die Fahrzeuge 106, 106' in einer Querparkposition. Zwischen den Fahrzeugen 106, 106' befindet sich eine Parklücke 108.

Das Fahrzeug 100 umfasst ein erfindungsgemäß vorgeschlagenes Fahrassistenzsystem 102 mit integrierter Umfeldsensorik, die in der hier dargestellten Ausführungsform vorne und seitlich am Fahrzeug angeordnete Ultraschallsensoren 112, 114 aufweist. Im Frontbereich, beispielsweise der Frontstoßstange, des Fahrzeuges 100 sind mehrere Ultraschallsensoren 114 vorgesehen, deren Erfassungsbereich 118 zumindest teilweise überlappend vor dem Fahrzeug 100 liegt. Der in der hier dargestellten Ausführungsform seitliche Ultraschallsensor 112 weist einen Erfassungsbereich 110 auf, der das seitliche Umfeld des Fahrzeuges im vorderen Bereich abdeckt. Zusätzlich umfasst das Fahrzeug 100 eine im Fahrassistenzsystem 102 integrierte Ortungseinrichtung 128 und eine im Fahrassistenzsystem 102 integrierte Kamera 130. Die Scheinwerfer 132 des Fahrzeuges 100, die Ortungseinrichtung 128 und die Kamera 130 sind der Übersichtlichkeit halber im schematisch dargestellten Bewegungsablauf des Fahrzeuges 100 nicht gezeigt.

Während sich das Fahrzeug 100 in Fahrtrichtung 116 entlang der parkenden Fahrzeuge 104, 104', 106, 106' bewegt, sammelt die im Fahrassistenzsystem 102 integrierte Umfeldsensorik kontinuierlich Umfelddaten, die das Umfeld des Fahrzeuges 100 charakterisieren. Im Laufe der Vorbeifahrt des Fahrzeuges 100 detektiert der seitliche Ultraschallsensor 112 das Fahrzeug 104. Im Bereich zwischen den parkenden Fahrzeugen 104 und 104' detektiert der Ultraschallsensor 112 eine Lücke 109, auf die ein erneutes Hindernis, nämlich das Fahrzeug 104', folgt. Im Anschluss an diesen Fahrabschnitt wird die Breite der detektierten Lücke 109 in einer Auswerteinheit 103 des Fahrassistenzsystems 102 berechnet. Aus den Daten dieses Fahrabschnittes kann die Auswerteinheit bestimmen, welche Breite die Parklücke aufweist, ob eine Parklücke vorliegt und ob es sich dabei um eine Längs- oder Querparklücke handelt. Ist die Breite der detektierten Lücke 109 kleiner als ein Schwellenwert, der sich in diesem Fall nach der maximalen Breite des Fahrzeuges 100 richtet, so wird die detektierte Lücke 109 dem Fahrer des Fahrzeuges 100 nicht als Parklücke angezeigt.

Bei der Weiterfahrt des Fahrzeuges 100 in Fahrtrichtung 116 detektiert der seitliche Ultraschallsensor 112 eine weitere Lücke 108 zwischen den querparkenden Fahrzeugen 106 und 106'. Zunächst wird das Fahrzeug 106 vom Sensor 112 erfasst. Sobald das Fahrzeug 106' passiert ist, detektiert der Ultraschallsensor 112 eine Lücke 108. Anschließend folgt bei der Weiterfahrt eine erneute Detektion durch den Sensor 112, der das Fahrzeug 106 erfasst. Aus diesen Daten wird die Breite der Parklücke 108 bestimmt. Daraus ergibt sich, ob eine Parklücke 108 vorliegt und ob es sich dabei um eine Längs- oder Querparklücke handelt. Ist die Breite der Lücke 108 größer als ein Schwellenwert, der sich im Falle von Längsparklücken nach der Länge des Fahrzeuges bestimmt, so zeigt das Fahrassistenzsystem 102 dem Fahrer die Lücke 108 als Parklücke an.

Auf diese Weise kann durch die Detektion von Hindernissen mittels seitlicher Ultraschallsensoren 112 eine Parklücke im Vorbeifahren aufgefunden werden und dem Fahrer angezeigt werden. Die Ausgabe eines Hinweises an den Fahrer kann dabei durch eine Komponente des Fahrassistenzsystems 102, wie zum Beispiel ein Display oder einen Lautsprecher, erfolgen. Alternativ oder zusätzlich kann das Fahrassistenzsystem 102 und insbesondere der Einparkassistent so ausgeführt sein, dass nach Erkennen einer Parklücke 108 eine Einparktrajektorie berechnet wird und der Einparkvorgang selbsttätig durchgeführt wird.

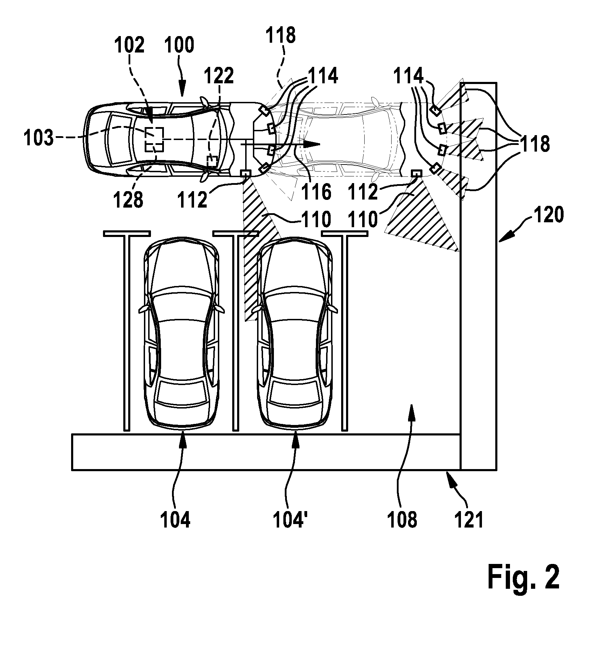

Figur 2 zeigt ein Fahrzeug 100, ausgerüstet mit einem erfindungsgemäßen Fahrassistenzsystem 102, das sich in einer Fahrsituation in einem Parkhaus befindet. In Figur 2 sind die Bezugszeichen für die Scheinwerfer 132 des Fahrzeuges 100 und die Kamera 130 der Übersichtlichkeit halber nicht dargestellt. Wie in einem Parkhaus üblich, sind manche Parkplätze durch Wände 120, 121 begrenzt. Die Parklücken, die durch die Fahrzeuge 104 sowie 104' belegt sind, sind dabei ausschließlich durch eine Wand 121 begrenzt. Die Parklücke 108 dagegen ist durch zwei Wände 120, 121 begrenzt, die in einem Winkel von 90° zueinander angeordnet sind.

Während sich das Fahrzeug 100 in Fahrtrichtung 116 entlang der parkenden Fahrzeuge 104, 104' bewegt, detektiert der Sensor 112 die parkenden Fahrzeuge 104, 104'. Weiterhin wird die Lücke zwischen den beiden Fahrzeugen 104 und 104' wie vorstehend beschrieben aufgrund ihrer zu geringen Breite nicht dem Fahrer als Parklücke angezeigt.

Die Ultraschallsensoren 114 weisen einen Erfassungsbereich 118 auf, der das Umfeld vor dem Fahrzeug 100 abdeckt. Sobald das Fahrzeug 100 einen Abstand zu der Wand 120 erreicht, der in der Reichweite der Ultraschallsensoren 114 liegt, detektieren die vorderen Ultraschallsensoren 114 ein Hindernis 120. In dieser Situation erfasst der seitliche Ultraschallsensor 112 das Fahrzeug 104' und die vorderen Ultraschallsensoren 114 erfassen die Wand 120.

Beim Auswerten der vorderen Sensordaten wird mittels Triangulation der Abstand zwischen dem Fahrzeug 100 und der Wand 120 bestimmt. Ist dieser Abstand beispielsweise geringer als die Breite des Fahrzeuges 100 und detektiert der seitliche Ultraschallsensor 112 das Fahrzeug 106 nicht mehr, so kann auf das Vorliegen einer Parklücke 108 geschlossen werden.

Als zusätzliche Konfidenzprüfung wird der gemessene Abstand jedes einzelnen der Ultraschallsensoren 114 beziehungsweise von Paaren von Ultraschallsensoren 114 aus Triangulation verglichen. Stimmen diese Abstände innerhalb einer Toleranz von 5 bis 10 cm überein, so kann daraus geschlossen werden, dass die Frontkontur des Hindernisses 120 vor dem Fahrzeug 100 eben verläuft und dass es sich um eine Wand 120 handelt. In diesem Fall kann von der in Figur 2 dargestellten Situation ausgegangen werden, und dem Fahrer wird eine Parklücke 108 angezeigt. Die Ausgabe eines Hinweises an den Fahrer erfolgt über eine in dem Fahrassistenzsystem 102 integrierte Mensch-Maschine-Schnittstelle mit Bildschirm und/oder Lautsprecher. Weiterhin kann das Fahrassistenzsystem 102 und insbesondere der Parkassistent so ausgestaltet sein, dass der Einparkvorgang selbsttätig durchgeführt wird. Dazu kann bei der Anwesenheit des Fahrers im Fahrzeug 100 erst ein Hinweis an den Fahrer ausgegeben werden, so dass sich der Fahrer selbst für eine Parklücke entscheiden kann. Im Falle von rein autonomem Fahren, beispielsweise in einem autonomen Parkhaus, kann das selbsttätige Einparken auch ohne Hinweis an den Fahrer realisiert werden.

Alternativ oder zusätzlich zu dem vorstehend beschriebenen Auswertungsverfahren können die Umfelddaten auf weitere Merkmale untersucht werden, die auf eine wie beispielhaft in Figur 2 dargestellte Situation hinweisen. Beispielsweise kann die Auswertung einen von den Scheinwerfern 132 am Fahrzeug 100 erzeugten Lichtkegel berücksichtigen. In dieser Variante ist eine Kamera 130 angebracht, die Veränderungen im Lichtkegel des Scheinwerfers 130 vor dem Fahrzeug 100 detektiert und auf das Vorliegen der beispielhaft in Figur 2 dargestellten Situation schließen lässt.

Weiterhin kann zusätzlich oder alternativ zu obenstehenden Ausführungsformen in einer weiteren Variante die Position des Fahrzeuges 100 aus Daten einer Ortungseinrichtung 128 bestimmt werden. Liegen weiterhin Positionsdaten des Parkhauses vor, so kann aus dem Vergleich der digitalen Positionsdaten des Fahrzeuges 100 und dem Vorliegen einer Parkhausbegrenzung 120, 121 auf das Vorliegen der beispielhaft in Figur 2 dargestellten Situation geschlossen werden. Letztlich können vorstehend beschriebene Varianten beliebig kombiniert werden, um eine Situation, wie sie beispielhaft in Figur 2 dargestellt ist, zuverlässig zu erkennen.

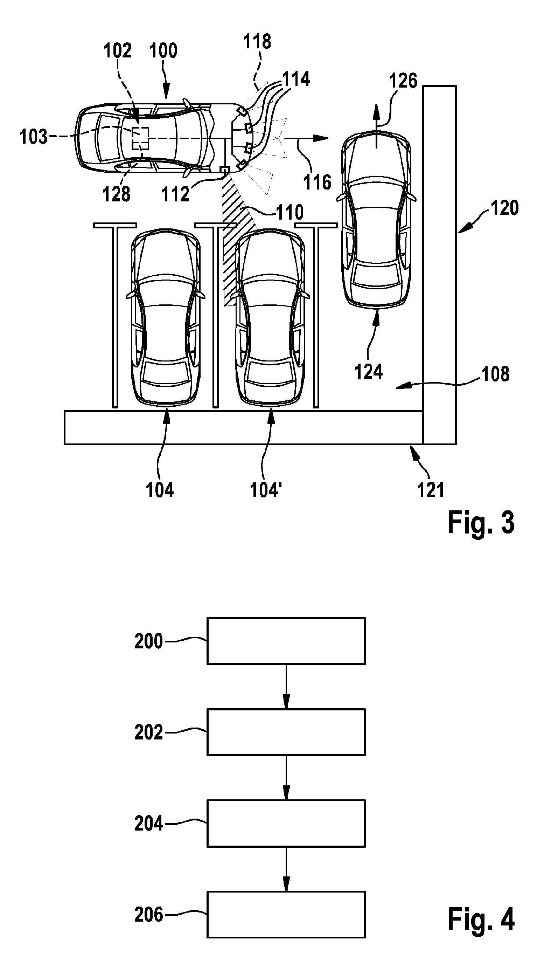

Figur 3 zeigt das Fahrzeug 100, ausgerüstet mit dem erfindungsgemäßen Fahrassistenzsystem 102, in einer Fahrsituation, die analog zu der in Figur 2 dargestellten Fahrsituation ist. Auch in Figur 3 sind die Bezugszeichen für die Scheinwerfer 132 des Fahrzeuges 100 und die Kamera 130 der Übersichtlichkeit halber nicht dargestellt.

Im Unterschied zu Figur 2 befindet sich in der Parklücke 108 der Figur 3 ein entlang der Ausparkrichtung 126 ausparkendes Fahrzeug 124. Das Fahrzeug 100, das sich entlang der parkenden Fahrzeuge 104, 104' bewegt, umfasst einen seitlich am Fahrzeug 100 angeordneten Ultraschallsensor 112 sowie vorne am Fahrzeug 100 angeordnete Ultraschallsensoren 114. Dabei liegt der Erfassungsbereich 110 des seitlichen Sensors 112 im seitlichen Umfeld des Fahrzeuges. Die Sensoren 114 weisen einen Erfassungsbereich 118 auf, der einen Bereich vor dem Fahrzeug abdeckt.

Bei der Vorbeifahrt des Fahrzeuges 100 detektiert der seitliche Ultraschallsensor 112 die Fahrzeuge 104, 104'während die Ultraschallsensoren 114 das Fahrzeug 124 erfassen. Die von den Ultraschallsensoren 114 bereitgestellten Umfelddaten weisen demzufolge auf ein Objekt 124 hin, das sich zeitlich verändert. Liegt eine solche Situation vor, in der der seitlich angeordnete Ultraschallsensor 112 die Fahrzeuge 104, 104' erfasst und die Ultraschallsensoren 114 ein zeitlich veränderliches, also ein temporäres Objekt 124 erfassen, so kann daraus geschlossen werden, dass eine Parklücke 108 frei wird. Auch diese Situation kann dem Fahrer angezeigt werden, wobei eine in dem Fahrassistenzsystem 102 integrierte Mensch-Maschine-Schnittstelle mit Bildschirm und Lautsprecher den Fahrer über die potenzielle Parklücke unterrichtet. Auch kann ein selbsttätiges Durchführen des Einparkvorganges durch den Parkassistenten erfolgen, sobald das ausparkende Fahrzeug 124 von den vorne am Fahrzeug 100 angeordneten Ultraschallsensoren 114 nicht mehr detektiert wird.

Figur 4 zeigt ein Flussdiagramm, das beispielhaft das Zusammenspiel zwischen den Komponenten gemäß den Figuren 1 bis 3 erläutert. In einem ersten Schritt 200 des Verfahrens werden Umfelddaten durch eine oder mehrere Komponenten des Fahrassistenzsystems102 erfasst. Zu diesen Komponenten gehören beispielsweise Umfeldsensoren 112, 114, eine Ortungseinrichtung 128 sowie etwaige optische Sensoren 130. Diese Umfelddaten des Fahrzeuges werden kontinuierlich während des Fahrens gesammelt und im Hinblick auf Objekte 104, 104', 106, 106', 124, 120 ausgewertet.

Bei der Auswertung 202 werden Umfelddaten, die das seitliche Umfeld des Fahrzeuges charakterisieren, herangezogen, um sich in diesem Bereich befindliche Objekte, wie zum Beispiel parkende Fahrzeuge 104, 104', 106, 106', zu erkennen. In einem weiteren Auswertungsschritt 204 werden Umfelddaten, die außerhalb des seitlichen Umfeldes des Fahrzeuges 100 liegen, herangezogen, um weitere Objekte, 120, 124, die sich insbesondere vor dem Fahrzeug befinden, zu erkennen.

Eine weitere Möglichkeit, ein zweites Objekt in Schritt 204 zu detektieren, ist die Auswertung eines Lichtkegels, der von Scheinwerfern am Fahrzeug 100 erzeugt wird. Dabei können Veränderungen im Lichtkegel der Scheinwerfer durch eine im Fahrassistenzsystem 102 integrierte Kamera erkannt werden. Auch eine im Fahrassistenzsystem 102 integrierte Ortungseinrichtung 128 ermöglicht über die Position des Fahrzeuges und digitalen Informationen zu dem Parkhaus, eine solche Auswertung. Letztlich ist es ebenfalls möglich, Kamerabilder einer Kamera 134 im Hinblick auf ein zweites Objekt vor dem Fahrzeug 100 auszuwerten oder aber Umfelddaten einer auf Radar oder Laser basierenden Sensorik zu verwenden.

Werden sowohl ein erstes Objekt im seitlichen Bereich des Fahrzeuges 100 als auch ein zweites Objekt im vorderen Bereich des Fahrzeuges detektiert, so wird auf das Vorliegen einer Parklücke geschlossen und in Schritt 206 erfolgt die Ausgabe eines Hinweises an den Fahrer und/oder es wird ein Signal generiert, das den Parkassistenten triggert den Einparkvorgang selbsttätig durchzuführen.

## Patentansprüche

1. Verfahren zur Unterstützung eines Fahrers eines Fahrzeuges (100) bei einem Einparkvorgang, das die folgenden Schritte umfasst:
a) Bereitstellen von Umfelddaten, die das Umfeld des Fahrzeuges (100) charakterisieren;
b) Auswerten der Umfelddaten im Bezug auf mindestens ein erstes Objekt (104, 104', 106, 106') in einem seitlichen Umfeld des Fahrzeuges (100), das eine potenzielle Parklücke (108) andeutet;
**gekennzeichnet durch** die folgenden Schritte:
c) Auswerten der Umfelddaten im Bezug auf mindestens ein zweites Objekt (120, 124) außerhalb des seitlichen Umfeldes des Fahrzeuges (100), das das Vorhandensein der Parklücke (108) bestätigt;
d) Anzeigen der vorhandenen Parklücke (108).

2. Verfahren gemäß Anspruch 1, **dadurch gekennzeichnet, dass** die Umfelddaten von mindestens einer Umfeldsensorik (112, 114, 130) und/oder mindestens einer Ortungseinrichtung (128) bereitgestellt werden.

3. Verfahren gemäß einem der Ansprüche 1 oder 2, **dadurch gekennzeichnet, dass** die Umfelddaten Sensordaten mindestens eines Umfeldsensors (112, 114, 130) umfassen, der Objekte in dem seitlichen Umfeld des Fahrzeuges und/oder in einem Umfeld vor dem Fahrzeug (100) detektiert.

4. Verfahren gemäß einem der Ansprüche 1 bis 3, **dadurch gekennzeichnet, dass** die Umfelddaten im Bezug auf das zweite Objekt (120, 124) in dem Umfeld vor dem Fahrzeug (100) ausgewertet werden.

5. Verfahren gemäß einem der Ansprüche 1 bis 4, **dadurch gekennzeichnet, dass** Umfelddaten in einer zeitlichen Abfolge im Bezug auf das zweite Objekt (120, 124) in dem Umfeld vor dem Fahrzeug (100) ausgewertet werden.

6. Verfahren gemäß einem der Ansprüche 1 bis 5, **dadurch gekennzeichnet, dass** die Umfelddaten im Bezug auf das zweite Objekt (120, 124) anhand von Veränderungen in mindestens einem Lichtkegel in dem Umfeld vor dem Fahrzeug (100) ausgewertet werden, wobei der Lichtkegel durch mindestens einen Scheinwerfer (132) an dem Fahrzeug (100) erzeugt wird.

7. Verfahren gemäß einem der Ansprüche 1 bis 6, **dadurch gekennzeichnet, dass** die Umfelddaten digitale Informationen, die die Position des Fahrzeuges (100) und von Objekten im Umfeld des Fahrzeuges beinhalten, und die Umfelddaten im Bezug auf das zweite Objekt (120) anhand der digitalen Informationen ausgewertet werden.

8. Computerprogramm zur Durchführung des Verfahrens gemäß einem der Ansprüche 1 bis 7, wobei das Computerprogramm auf einer programmierbaren Computereinrichtung ausgeführt wird.

9. Fahrassistenzsystem (102) zur Durchführung des Verfahrens gemäß einem der Ansprüche 1 bis 7, das folgende Komponenten umfasst:
- mindestens eine Komponente (112, 114, 130, 128) zum Bereitstellen von Umfelddaten, die das Umfeld des Fahrzeuges (100) charakterisieren,
- mindestens eine Komponente (103) zum Auswerten der bereitgestellten Daten,
- mindestens eine Komponente zum Anbieten einer Parklücke zum Einparken des Fahrzeuges,
**dadurch gekennzeichnet, dass** die Komponente (103) zum Auswerten der bereitgestellten Daten ausgebildet ist, mindestens ein erstes Objekt (104), das eine potenzielle Parklücke (108) andeutet, in einem seitlichen Umfeld des Fahrzeuges (100) zu identifizieren und mindestens ein zweites Objekt (120, 124), das auf das Vorhandensein der Parklücke (108) hinweist, außerhalb des seitlichen Umfeldes des Fahrzeuges (100) zu identifizieren.

10. Fahrassistenzsystem (102) gemäß Anspruch 9, **dadurch gekennzeichnet, dass** die Komponente (112, 114, 130, 128) zum Bereitstellen von Umfelddaten eine Umfeldsensorik (112, 114, 130) und/oder mindestens eine Ortungseinrichtung (128) umfasst.

11. Fahrassistenzsystem (102) gemäß einem der Ansprüche 9 oder 10 umfassend ein oder mehrere Umfeldsensoren (112, 114, 130) an einer Front und/oder an mindestens einer Seite des Fahrzeuges (100).

## Claims

1. Method for assisting a driver of a vehicle (100) during a parking procedure, which method comprises the following steps of:
a) providing environmental data which characterize the environment of the vehicle (100);
b) evaluating the environmental data with respect to at least one first object (104, 104', 106, 106') in an environment to the side of the vehicle (100), which first object indicates a potential parking space (108);
**characterized by** the following steps of:
c) evaluating the environmental data with respect to at least one second object (120, 124) outside the environment to the side of the vehicle (100), which second object confirms the presence of the parking space (108);
d) displaying the available parking space (108).

2. Method according to Claim 1, **characterized in that** the environmental data are provided by at least one environment sensor system (112, 114, 130) and/or at least one position-finding device (128).

3. Method according to either of Claims 1 and 2, **characterized in that** the environmental data comprise sensor data from at least one environment sensor (112, 114, 130) which detects objects in the environment to the side of the vehicle and/or in an environment in front of the vehicle (100).

4. Method according to one of Claims 1 to 3, **characterized in that** the environmental data are evaluated with respect to the second object (120, 124) in the environment in front of the vehicle (100).

5. Method according to one of Claims 1 to 4, **characterized in that** environmental data are evaluated in a temporal sequence with respect to the second object (120, 124) in the environment in front of the vehicle (100).

6. Method according to one of Claims 1 to 5, **characterized in that** the environmental data are evaluated with respect to the second object (120, 124) using changes in at least one light cone in the environment in front of the vehicle (100), the light cone being produced by at least one headlight (132) on the vehicle (100).

7. Method according to one of Claims 1 to 6, **characterized in that** the environmental data comprise digital information which includes the position of the vehicle (100) and objects in the environment of the vehicle, and the environmental data are evaluated with respect to the second object (120) using the digital information.

8. Computer program for carrying out the method according to one of Claims 1 to 7, wherein the computer program is executed on a programmable computer device.

9. Driving assistance system (102) for carrying out the method according to one of Claims 1 to 7, which system comprises the following components:
- at least one component (112, 114, 130, 128) for providing environmental data which characterize the environment of the vehicle (100),
- at least one component (103) for evaluating the data which have been provided,
- at least one component for providing a parking space for parking the vehicle,
**characterized in that**
the component (103) for evaluating the data which have been provided is designed to identify at least one first object (104), which indicates a potential parking space (108), in an environment to the side of the vehicle (100) and to identify at least one second object (120, 124), which indicates the presence of the parking space (108), outside the environment to the side of the vehicle (100).

10. Driving assistance system (102) according to Claim 9, **characterized in that** the component (112, 114, 130, 128) for providing environmental data comprises an environment sensor system (112, 114, 130) and/or at least one position-finding device (128).

11. Driving assistance system (102) according to either of Claims 9 and 10, comprising one or more environment sensors (112, 114, 130) on a front and/or on at least one side of the vehicle (100).

## Revendications

1. Procédé d'assistance au conducteur d'un véhicule (100) dans une manoeuvre de stationnement, le procédé comportant les étapes suivantes :
a) fourniture de données qui caractérisent l'environnement du véhicule (100),
b) vérification dans les données d'environnement de la présence d'au moins un premier objet (104, 104', 106, 106') situé dans l'environnement latéral du véhicule (100) et indiquant la présence possible d'un emplacement de stationnement (108),
**caractérisé par** les étapes suivantes :
c) vérification dans les données d'environnement de la présence éventuelle d'au moins un deuxième objet (120, 124) situé à l'extérieur de l'environnement latéral du véhicule (100) et qui confirme la présence de l'emplacement de stationnement (108) et
d) affichage de l'emplacement de stationnement (108) présent.

2. Procédé selon la revendication 1, **caractérisé en ce que** les données d'environnement sont délivrées par au moins un ensemble de capteurs d'environnement (112, 114, 130) et/ou d'au moins un dispositif de localisation (128).

3. Procédé selon l'une des revendications 1 ou 2, **caractérisé en ce que** les données d'environnement comprennent les données d'au moins un capteur d'environnement (112, 114, 130) qui détecte la présence d'objets dans l'environnement latéral du véhicule et/ou dans l'environnement situé en avant du véhicule (100).

4. Procédé selon l'une des revendications 1 à 3, **caractérisé en ce que** la présence du deuxième objet (120, 124) dans l'environnement situé en avant du véhicule (100) est vérifiée dans les données d'environnement.

5. Procédé selon l'une des revendications 1 à 4, **caractérisé en ce que** la présence du deuxième objet (120, 124) dans l'environnement situé en avant du véhicule (100) est évaluée en succession temporelle dans les données d'environnement.

6. Procédé selon l'une des revendications 1 à 5, **caractérisé en ce que** la présence du deuxième objet (120, 124) dans l'environnement situé en avant du véhicule (100) est vérifiée dans les données d'environnement à l'aide de modifications d'au moins un faisceau lumineux, le faisceau lumineux étant formé par au moins un phare (132) du véhicule (100).

7. Procédé selon l'une des revendications 1 à 6, **caractérisé en ce que** les données d'environnement contiennent des informations numériques qui contiennent la position du véhicule (100) et des objets dans l'environnement du véhicule et **en ce que** la présence du deuxième objet (120) est évaluée dans les données d'environnement à l'aide des informations numériques.

8. Programme informatique destiné à mettre en oeuvre le procédé selon l'une des revendications 1 à 7, le programme informatique étant exécuté sur un dispositif de calcul programmable.

9. Système (102) d'assistance à la conduite destiné à mettre en oeuvre le procédé selon l'une des revendications 1 à 7 et présentant les composants suivants :
au moins un composant (112, 114, 130, 128) qui délivre des données qui caractérisent l'environnement du véhicule (100),
au moins un composant (103) qui évalue les données délivrées,
au moins un composant qui propose un emplacement de stationnement permettant de stationner le véhicule, **caractérisé en ce que**
le composant (103) est configuré pour évaluer les données délivrées, pour identifier au moins un premier objet (104) qui indique la présence possible d'un emplacement de stationnement (108) dans l'environnement latéral du véhicule (100) et pour identifier au moins un deuxième objet (120, 124) qui indique la présence de l'emplacement de stationnement (108) à l'extérieur de l'environnement latéral du véhicule (100).

10. Système (102) d'assistance à la conduite selon la revendication 9, **caractérisé en ce que** le composant (112, 114, 130, 128) qui délivre les données d'environnement comporte un ensemble de capteurs d'environnement (112, 114, 130) et/ou au moins un dispositif de localisation (128).

11. Système (102) d'assistance à la conduite selon l'une des revendications 9 ou 10, comprenant un ou plusieurs capteurs d'environnement (112, 114, 130) à l'avant et/ou sur au moins un côté du véhicule (100).
